# EUROPEAN PATENT SPECIFICATION

(11) **EP 0 533 343 B1**
(45) Date of publication and mention of the grant of the patent: **11.06.1997**
(21) Application number: 92307347.2
(22) Date of filing: 11.08.1992
(51) Int. Cl.: G06K 15/00, G06K 15/02

(54) **System and method for data management**
Anordnung und Verfahren zur Verwaltung von Daten
Système et méthode de gestion de données

(30) Priority: 16.09.1991 US 760620
(43) Date of publication of application: 24.03.1993
(73) Proprietor: ADVANCED MICRO DEVICES, INC., Sunnyvale, CA 94088-3453 (US)
(72) Inventor: Relph, Richard A., Austin, Texas 78746 (US)
(74) Representative: Wright, Hugh Ronald

(56) References cited:
- EP-A- 0 387 005
- EP-A- 0 478 304
- DE-A- 3 816 627

## Description

### BACKGROUND OF THE INVENTION

The present invention is generally directed to a system and method for data management, for example, a management unit to reduce memory requirements for operation of a computer peripheral device. More particularly, the preferred embodiment of the present invention is useful for reducing the memory requirements for operation of a laser printer.

A laser printer is a computer peripheral device for producing printed copy output of digital data. Such a peripheral device is typically coupled to data processing equipment, such as a host computer or a local area network. In such an arrangement, the host computer transmits digital data to the laser printer which produces a graphic image representative of the received data. A typical laser printer may contain a microprocessor which responds to a control program, such as PostScript®¹, by translating data and instructions from the host computer into the scan and print patterns used by the laser printer. The instructions received by the laser printer are employed by the microprocessor responding to the control program to control the printing apparatus (the engine) of the laser printer.
¹ PostScript® is sold by Adobe Systems, Inc., Mountain View, Calif. 94039

In addition to a microprocessor, a typical laser printer may also contain a digital memory. Such memory may include a read-only memory ("ROM") containing the control program for the microprocessor and information describing, for example, the text fonts which are supported by the laser printer, and a random access memory ("RAM") for storing data. When the host computer transmits data to the laser printer, the microprocessor translates the received data into a bit map of the pattern of dots that comprise the text or graphics as they are to appear on a printed page. This process is known as rendering and the bit map is comprised of rendered data. The rendered data are then written into the RAM by the microprocessor. After data for an entire page have been received from the host and written as rendered data into the RAM, the rendered data are read from the RAM by the microprocessor and used to control operation of the laser printer engine. Printing is actually accomplished by the engine, the component of the laser printer which physically conveys the image onto the page.

Because the laser printer prints each single page only after receiving and rendering all of the data for that page, the RAM must be of sufficient size to hold the amount of rendered data associated with a page. In a typical application, such as a page rendered using the Postscript® printer control program, the rendered image of a page may comprise more than 1 megabyte ("MB") of data. In addition to rendered data storage, the printer control program itself may occupy 0.5 MB of RAM storage. As a result, total RAM storage requirements may be as great as 2 MB to allow printing of a single page.

These representative storage requirements are consistent with a print density of 300 dots per inch ("DPI"), where one inch = 2.54 cm. Some laser printer applications require higher density printing, such as 480 or 600 DPI. Higher density printing allows finer resolution of the printed text and graphics. However, higher density printing also requires an increased number of dots to form an image on the page. Consequently, higher density printing operation of a laser printer increases the RAM storage requirements of the laser printer. Such large RAM requirements often result in higher cost and slower operation of a laser printer and, thus, have limited the application of laser printers with memory-intensive operations, such as high density printing, in the past.

Prior art attempts at improving operational speed in managing large amounts of data in computer peripheral devices such as laser printers have principally relied on increasing the amount of on-board physical memory, i.e. RAM. Generally, physical memory is distinguished from virtual memory in that physical memory is directly addressable by the microprocessor. A virtual memory system requires address translation techniques, well known in the art, to convert the virtual address to the physical address in RAM or in a mass storage device such as a disk drive. Prior art designs of computer peripheral devices have generally lacked these virtual memory techniques. In such prior art designs, applications that required 2 MB of RAM storage required at least 2 MB of on-board physical memory in the laser printer. Integrated circuits including on-board RAM constitute a substantial portion of the cost of a laser printer. Thus, providing sufficient RAM in a laser printer for memory intensive applications, such as high density printing or advanced graphics capability, adds substantially to unit cost; a larger RAM also occupies considerable "real estate" in a printed circuit in the laser printer, and reduces system reliability for the laser printer. Thus, the net effect in such prior art designs is to increase the overall cost and reduce the operational effectiveness of the laser printer.

DE-A-3 816 627 discloses a system for managing data in a peripheral device. In particular it discloses a digital copier which uses a laser card for storing image data. The laser card control unit, illustrated in FIG. 5 of DE-A-3 816 627 includes a bit map memory for temporary storage of image data and a compander for compressing the stored image data for subsequent optical storage. It discloses compression of selected image data, in that data is compressed only if it does not fit, before compression, onto the laser card, Crestliche Speicherkapazität, Page 10). The specification does not disclose use of a memory management unit (MMU) or conversion between physical and virtual addresses.

We will describe a system which overcomes these limitations in memory-intensive operations and provides other advantages over the prior art. We will describe an onboard memory management unit to manage the storage of data and reduce memory requirements. This allows virtually-addressed data to be stored in a compressed format in physical memory where they are not directly accessed by the microprocessor. Storage and retrieval in virtual memory is controlled by a memory management unit integral to the invention. The memory-management unit responds to a software control program which monitors system status and directs memory management unit action. The memory management unit provides address translation to create a virtual memory system in which data are moved within the RAM, rather than between RAM and disk. Storing data in a compressed format reduces the total memory required for data storage. Reduction in memory requirement in turn reduces system cost and complexity and improves system reliability.

The invention provides a system and a method as specified by claims 1 and 6 for managing digital data in a computer peripheral device which receives the data from a host computer. The system includes a processing means which receives data from the host computer and uses the data to control the computer peripheral device. The system further includes an on-board memory means which stores data and comprises a plurality of storage locations. The system still further includes a memory management means for controlling the storage of data in the memory means. The system still further includes a compression means for effecting compressed storage of data in the memory means. The memory management means determines when the amount of data stored in the memory device exceeds a predetermined threshold and generates a compression signal. The compression means responds to the compression signal by effecting compressed storage of data within the memory means.

The plurality of storage locations comprising the memory means may be arranged in ordered arrays of subsets of storage locations. Preferably, the memory management means controls communication of data between a first subset of the ordered array of subsets and a second subset of the ordered array of subsets after compressed storage of the data has been effected.

In the preferred embodiment, the memory management means directs storage of data by the processing means in each subset of the ordered array of subsets. Storage is effected until the amount of data stored in a selected subset exceeds a predetermined threshold for that selected subset. When the threshold for the selected subset is reached, the memory management means then generates a compression signal for the system. The compression means responds to the compression signal by effecting compressed storage of data in the selected subset. The system is flexibly designed so that each respective subset may be treated as a selected subset for compression treatment by the memory management means.

The various subsets are hierarchically designated so that when compression of data within a first subset yields available storage capacity within the first subset, the memory management unit may direct data stored within a second subset for storage within the now-vacant storage available in the first subset. Preferably data shifted from the second subset will be stored within the first subset in compressed form. Thus, additional storage is made available in the second subset.

Storage of data within the second subset is then accomplished in a non-compressed form until the threshold of the system is reached.

It is true that, as a practical matter, decompression and retrieval of compressed data is slower than retrieval of non-compressed data, and it is true that some additional on-board storage is occupied by programming information necessary for compression of data (and for decompression of data when the data is later retrieved).

We will describe a system and method for using an on-board memory management unit in a computer peripheral device to reduce memory requirements for operation of the computer peripheral device by directing the storage of data in selected subsets of an on-board memory device, compressing the data into a format which requires less physical memory, and moving the data in compressed format among subsets of the memory device to allow storage of uncompressed data to continue.

We will describe a system and method for using an on-board memory management unit in a computer peripheral device to reduce memory requirements by allowing data to be freely moved among subsets of on-board storage sites in both compressed and uncompressed formats.

Further objects and features of the present invention will be apparent from the following specification and claims when considered in connection with the accompanying drawings illustrating the preferred embodiment of the invention.

### BRIEF DESCRIPTION OF THE DRAWINGS

Fig. 1 is a block diagram of a system in which the present invention may be employed, including a host computer and a peripheral laser printer.

Fig. 2 is a block diagram illustrating memory usage in a prior art implementation of a laser printer.

Fig. 3 is a block diagram illustrating memory usage in a computer peripheral device employing the present invention.

Fig. 4 is a schematic diagram illustrating memory usage during operation of a computer peripheral device employing the present invention.

Fig. 5 is a schematic flow chart illustrating the method of using the memory management unit of the present invention.

### DETAILED DESCRIPTION OF THE INVENTION

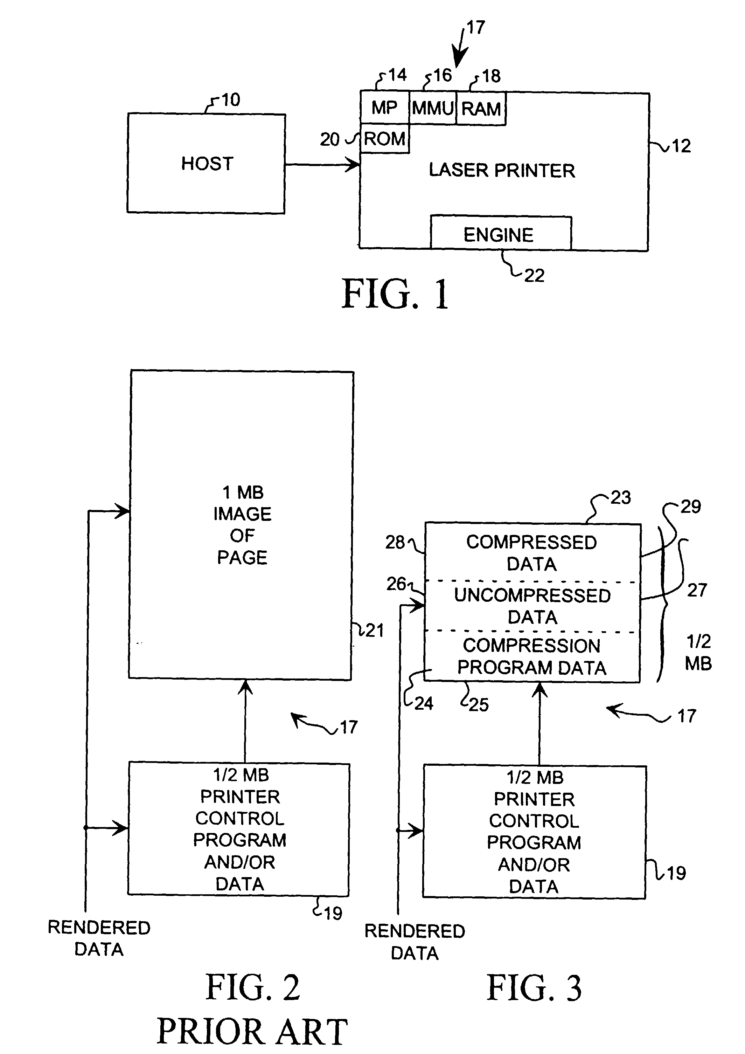

Fig. 1 is a block diagram of a system in which the present invention may be employed. In Fig. 1, a host computer 10 transmits data to a laser printer 12. Host computer 10 and laser printer 12 may be directly coupled or may be coupled over a local area network (not shown) which is connectable to other data processing devices (not shown).

Laser printer 12 includes a microprocessor ("µp") 14, a memory management unit ("MMU") 16, memory 17 which may include random access memory ("RAM") 18 and read only memory ("ROM") 20, and an engine 22. Microprocessor 14 receives data from host computer 10 and processes the received data in response to instructions in a control program contained in memory 17. Microprocessor 14 uses the instructions and information contained in memory 17 to translate data from host computer 10 into the pattern of data required by engine 22 to form a readable symbol representative of the received data. This process is generally known as rendering the data.

There is preferably a one-to-one correspondence between the storage locations of RAM 18 and dot locations on the page to be printed (not shown) by engine 22. The data in RAM 18 are preferably in a pattern of logical "0's" and "1's", which pattern corresponds to the pattern of white and black regions on the printed page to be produced by engine 22. For example, a "1" stored in RAM 18 may cause engine 22 to produce a dot on the page, and a "0" in RAM 18 may cause engine 22 to leave the corresponding dot on the page white. Microprocessor 14 renders the data it receives from host computer 10 according to information contained in ROM 20, and then stores the rendered data in RAM 18. After an entire page of data has been rendered and accumulated in RAM 18, microprocessor 14 transmits the rendered data from RAM 18 to engine 22, and engine 22 prints the page. The process by which engine 22 prints the page is known as imaging.

In order to facilitate understanding of the invention, like elements will be referred to by like reference numerals in the various drawings.

Fig. 2 is a block diagram illustrating memory usage in RAM 18 in a prior art implementation of a laser printer. The control program which directs microprocessor 14 typically occupies a portion 19 of memory 17, preferably ROM 20. Portion 19 typically has a capacity of approximately 0.5 megabyte ("MB"). The rendered image of a page typically occupies a portion 21 of memory 17, preferably RAM 18. Portion 21 typically has a capacity of approximately 1 MB. Generally, each individual storage location in portion 21 of RAM 18 corresponds to a dot on the printed page to be produced. For example, initially all storage locations in portion 21 of RAM 18 may be set to "0", corresponding to a blank page. As microprocessor 14 stores rendered data in RAM 18, some of the storage locations remain set to "0" and some are reset to "1". In the prior art implementation illustrated in Fig. 2, microprocessor 14 stores rendered data by randomly accessing storage locations in RAM 18.

The sequence in which microprocessor 14 receives data may not correspond to the sequence in which the data will be imaged. Host computer 10 may transmit at widely differing times data which will create physically adjacent patterns on the imaged page after completion of imaging. For example, host computer 10 may transmit textual information first, and may then transmit graphical data, such as when a border is placed around a page of text.

If such time-differing data transmission occurs, when microprocessor 14 renders the graphical data, microprocessor 14 must access the same areas of RAM 18 as are accessed when rendering the textual data. This is because of the one-to-one correspondence between storage locations in RAM 18 and dots on the page. For example, rendered data for the top line of text on a page and the border around the text may be located at approximately the same address (i.e., the same logical location) in RAM 18. Thus, in the prior art design illustrated in Fig. 2, microprocessor 14 must be able to access all storage locations in RAM 18 at all times.

Because of this need for continuous and complete access to storage locations in RAM 18 by microprocessor 14, and because of the need to store rendered data for an entire page, prior art laser printer implementations have generally provided large, unitary portions of RAM for storage of data. However, some laser printer applications require higher density printing, which is achieved by printing more dots per inch. For example, one standard printing density is 300 dots per inch ("DPI"). Higher density applications may require 480 DPI, or even 600 DPI. Such higher density requires more RAM to hold the rendered data. As the printing density is increased, the size of the storage space provided in RAM must also increase.

Such a requirement for increased storage capacity is a serious problem in a laser printer, as it is with any computer peripheral device. RAM integrated circuits which generally implement on-board storage capacity in computer peripheral devices usually constitute a substantial portion of the cost of manufacture of such peripheral devices. In addition, RAM integrated circuits require substantial physical space ("real estate") in the on-board circuitry of a laser printer. Accommodating such high real estate requirements and providing the printed circuit board interconnections necessary for such accommodation increase the manufacturing cost of laser printers. In addition, such extra fabrication and additional connections decrease manufacturing yields and product reliability simply because they provide more opportunities for component or interconnection failure. Thus, a requirement for large amounts of RAM to accommodate high density printing or other memory-intensive operations imposes significant limits on the prior art design.

Fig. 3 is a block diagram illustrating memory usage in a computer peripheral device employing the present invention.

In Fig. 3, the control program which directs microprocessor 14 typically occupies a portion 19 of memory 17, preferably in ROM 20. Portion 19 typically has a capacity of approximately 0.5 MB of memory in memory 17, as in the prior art. In contrast to the prior art, however, the rendered image of a page in the present invention typically occupies a portion 23 of RAM 18. Portion 23 typically has a capacity of only approximately 0.5 MB of memory in RAM 18 because the present invention uses an on-board memory management unit 16 to control the compression and storage of rendered data within RAM 18, thereby reducing operational memory capacity requirements.

Compression techniques for digital data are well-known in the art. Such techniques may rely on patterns in the data to reduce the storage requirements for the data. For example, in laser printer applications, the pattern of dots required to print a portion of a single line of text is relatively consistent across adjacent laser scan lines. The consistency of the pattern permits the data to be stored as compressed data in a manner which may occupy only fifty percent of the storage space which would be required to store the same data in an uncompressed format while still representing the same information. When necessary, compressed data may be decompressed to their original uncompressed form. Data compression is accomplished by employing a compression program to direct microprocessor 14 to compress the data. The compression program may also be called to direct microprocessor 14 to decompress data when necessary, such as for employment of data by microprocessor 14 for imaging.

In Fig. 3, a compression program 24 occupies a segment 25 of portion 23 of memory 17. RAM 18 is preferably employed to store rendered data, which may be in the form of uncompressed data 26 stored, for example, in segment 27 of portion 23, or compressed data 28 stored, for example, in segment 29 of portion 23. During rendering, microprocessor 14 stores only uncompressed data 26 in RAM 18. As portion 23 of RAM 18 fills with uncompressed data 26, compression program 24 is called to compress uncompressed data 26 and store the result as compressed data 28. Because compressed data 28 occupy less space than uncompressed data 26, compression provides additional memory space for storage. The threshold at which compression program 24 is called may be determined dynamically by means of the software control program which directs memory management unit 16. Coordination of the storage and compression process is provided by memory management unit 16.

Preferably, RAM 18 is partitioned into a plurality of "pages" of equal size. For example, if RAM 18 is 0.5 MB in size, it may be partitioned into 256 pages, each 2 kilobytes ("kB") in size.

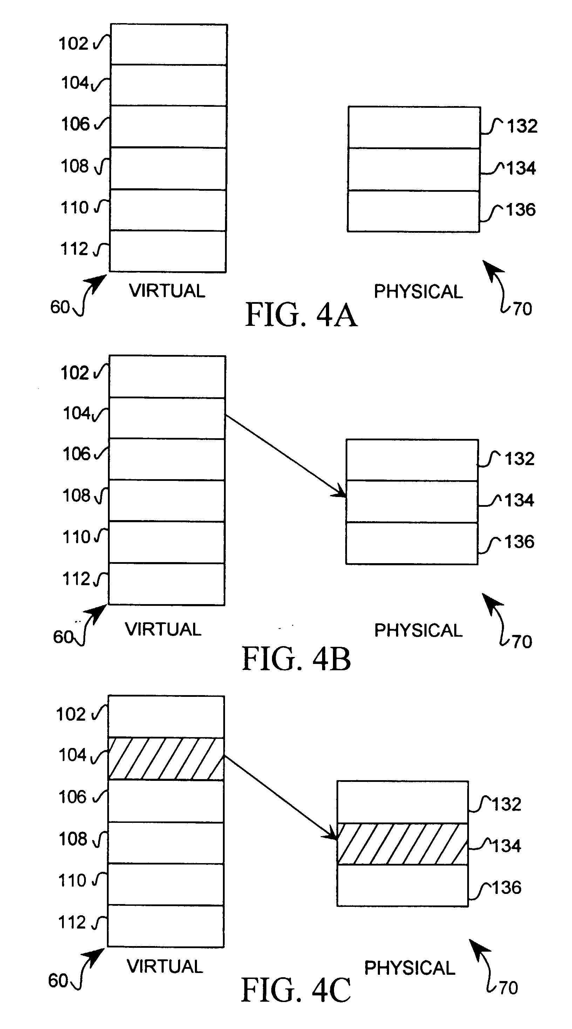

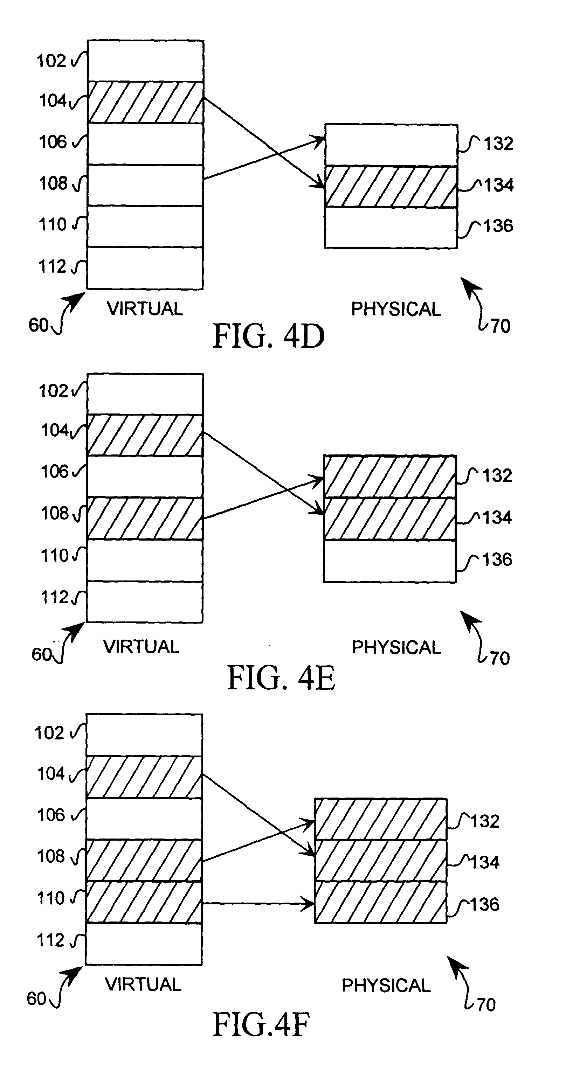

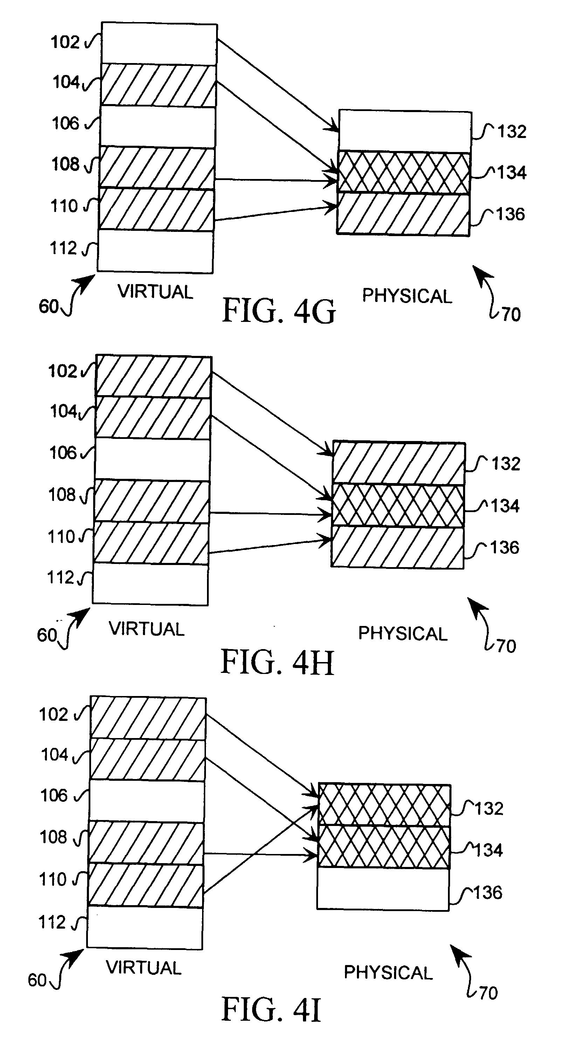

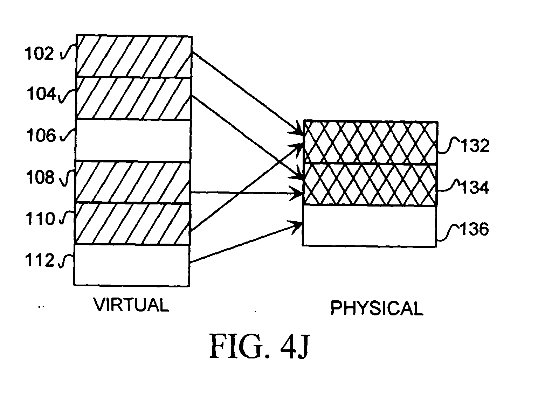

Fig. 4 illustrates memory usage in a computer peripheral device employing the present invention. Figs. 4A-4J show memory usage at different times during operation of RAM 18, that is, as RAM 18 fills with rendered data. In Figs. 4A-4J, the memory space labelled "virtual" represents virtual memory 60 addressed by microprocessor 14. The memory space labelled "physical" represents the physical memory 70 comprising RAM 18.

The relationship between virtual and physical memory is controlled by memory management unit 16, under the direction of a software control program. Microprocessor 14 communicates a virtual address to memory management unit 16. Memory management unit 16 uses the virtual address to calculate a physical address which is then communicated to physical memory.

Both virtual and physical memory are preferably partitioned into pages. In Fig. 4, virtual memory is partitioned into virtual pages 102, 104, 106, 108, 110, 112, and physical memory is partitioned into physical pages 132, 134, 136. It is to be understood that both virtual memory 60 and physical memory 70 may generally be partitioned into any number of pages and that Fig. 4 shows physical memory 60 and virtual memory 70 divided into six and three pages, respectively, for illustrative purposes only. Some of virtual pages 102, 104, 106, 108, 110, 112 and some of physical pages 132, 134, 136 may be designated for storage of rendered data and others may be designated for storage of other data.

In Fig. 4A, both virtual memory 60 and physical memory 70 are initially empty.

In Fig. 4B, microprocessor 14 has accessed virtual page 104 of virtual memory 60. Memory management unit 16 has allocated physical page 134 of physical memory 70. By allocating physical page 134 for virtual page 104, memory management unit 16 has directed that data written by microprocessor 14 to virtual page 104 will be physically written to physical page 134. The allocation of physical page 134 for virtual page 104 is indicated by the arrow drawn in Fig. 4B.

In Fig. 4C, virtual page 104 and physical page 134 contain rendered data in the form of uncompressed data 26, as shown by single cross-hatching.

In Fig. 4D, microprocessor 14 has accessed virtual page 108. Memory management unit 16 has accordingly allocated physical page 132, as indicated by the arrow drawn between virtual page 108 and physical page 132.

In Fig. 4E, virtual pages 104 and 108 and physical pages 132 and 134 contain rendered data in the form of uncompressed data 26, as shown by single cross-hatching.

In Fig. 4F, microprocessor 14 has accessed virtual page 110. Memory management unit 16 has accordingly allocated physical page 136, as indicated by the arrow drawn between virtual page 110 and physical page 136. Virtual page 110 and physical page 136 contain rendered data in the form of uncompressed data 26, as shown by single cross-hatching. All physical pages available for rendered data have been allocated.

In Fig. 4G, when memory management unit 16 senses that a predetermined number of physical pages 132, 134, 136 have been allocated and an additional page is needed for allocation, memory management unit 16 calls compression program 24 (see Fig. 3, not shown in Fig. 4). The predetermined number of physical pages may be all physical pages available for rendered data or may be some lesser number. Memory management unit 16 directs compression program 24 to compress uncompressed data 26 (Fig. 3) stored in physical pages 132 and 134.

Typically, in the preferred embodiment of the present invention, after compression, data occupy less than half the amount of storage space occupied before compression. As a result, rendered data in physical page 132 and physical page 134 may be stored together in the form of compressed data 28 (Fig. 3) in physical page 134. This is indicated by double cross-hatching in Fig. 4G. Memory management unit 16 directs compression of two pages (physical page 132 and physical page 134) of uncompressed data 26 into compressed data 28 and storage of the compressed data 28 into a single page (physical page 134) of RAM 18. This leaves one page (physical page 132) empty. After compression thus frees physical page 132 to again accommodate storage of data, memory management unit 16 then allocates physical page 132 for virtual page 102 and directs microprocessor 14 to resume writing rendered data to virtual page 102. Allocation is indicated in Fig. 4G by the arrow drawn between virtual page 102 and physical page 132.

In. Fig. 4H, virtual page 102 and physical page 132 contain rendered data in the form of uncompressed data 26, as shown by single cross-hatching.

In Fig. 4I, when memory management unit 16 senses that a predetermined number of physical pages 132, 134, 136 have been allocated and an additional page is needed for allocation, memory management unit 16 calls compression program 24. Memory management unit 16 directs compression program 24 to compress uncompressed data 26 stored in physical pages 132 and 136. Rendered data stored in physical page 132 and physical page 136 are stored together in the form of compressed data 28 in physical page 132. This is indicated by double cross-hatching in Fig. 4I.

Compression thus frees physical page 136 to again accommodate storage of data. Memory management unit 16 then allocates physical page 136 for virtual page 112, as indicated by the arrow drawn between virtual page 112 and physical page 136 in Fig. 4J. Memory management unit 16 then directs microprocessor 14 to resume writing rendered data to virtual page 112.

After data for an entire printed page are rendered and stored in RAM 18, the data must be sequentially accessed to operate engine 22 of the laser printer for imaging. The process of retrieving data from RAM 18 proceeds in essentially reverse order of the process by which data are stored. Memory management unit 16 calls compression program 24 to decompress compressed data 28. As a result of such decompression, data is stored in RAM 18 as uncompressed data 26. Uncompressed data 26 can then be accessed by microprocessor 14 to operate engine 22 for imaging. This process of decompressing and transmitting continues until all data in RAM 18 have been decompressed and accessed and the entire page is imaged.

An important feature of the preferred embodiment of the present invention is the ability of memory management unit 16 to direct movement of data among pages in either compressed or uncompressed form. Movement of data is necessary in order to allow microprocessor 14 to access portions of RAM 18 in which rendered data have been stored and compressed, such as when a graphical border is placed around text. Memory management unit 16 directs the decompression and the movement of data to a free page where they are accessed by microprocessor 14.

As an example, in Fig. 4J, physical page 132 may contain rendered data corresponding to a portion of the top of the page to be printed, including a portion of the first line of text. If the next data rendered by microprocessor 14 correspond to a graphical border to be placed adjacent the first line of text, microprocessor 14 must store those data in the appropriate locations in physical page 132. To enable microprocessor 14 to access data in physical page 132, memory management unit 16 will direct compression program 24 to decompress compressed data 28 in physical page 132. Uncompressed data 26 which results from such decompression will be stored in physical page 136. Since the data are now in uncompressed form, they can be accessed by microprocessor 14. Microprocessor 14 stores rendered data in physical page 136 as directed by memory management unit 16. If more data are rendered requiring additional space for storage, memory management unit 16 may call compression program 24 to compress uncompressed data 26 in physical page 136 and store the resultant compressed data 28 in physical page 132.

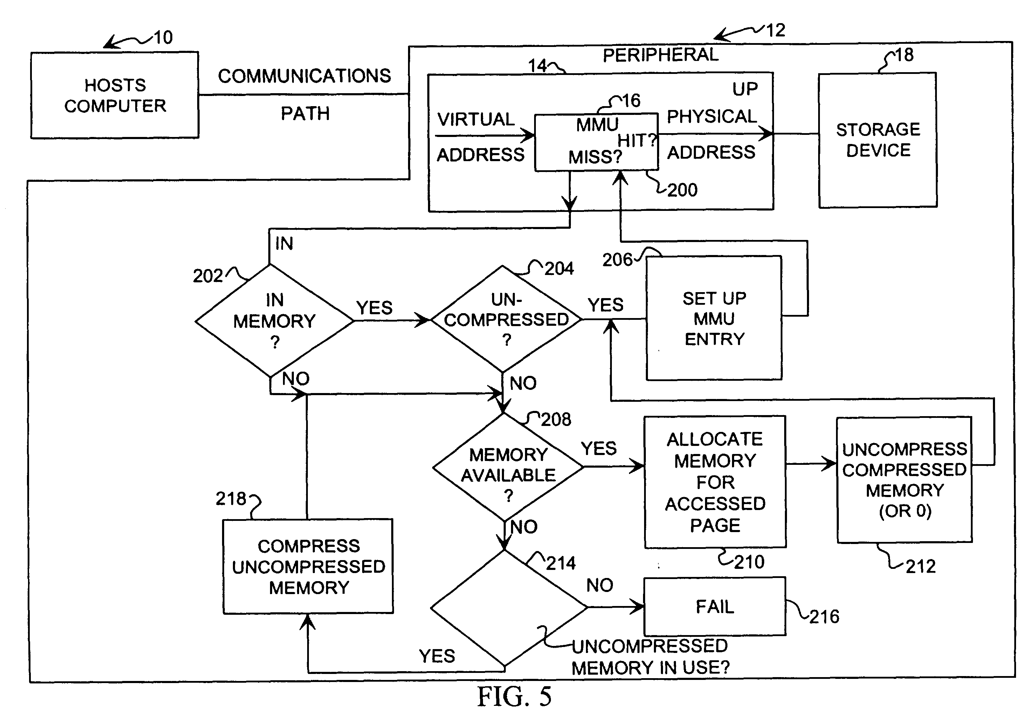

Fig. 5 is a schematic flow chart illustrating the method of using the memory management unit of the present invention.

In Fig. 5, microprocessor 14 provides a virtual address to memory management unit 16. The virtual address may be representative of the location where a page of rendered data is to be stored or accessed. Memory management unit 16 translates the virtual address to the physical address in RAM 18 where data are actually located. For example, memory management unit 16 may add an offset to the virtual address to obtain the physical address of the desired page in RAM 18.

In Fig. 5, memory management unit 16 determines at block 200 whether the virtual address corresponds to a physical address without software assistance or additional information. If so, a hit condition results and memory management unit 16 provides the physical address to microprocessor 16, which in turn accesses RAM 18. If not, a miss condition results and memory management unit 16 must determine the physical address.

To calculate the physical address, memory management unit 16 first determines at block 202 whether the addressed virtual page (the target page) is in memory. In a manner well known in the art, memory management unit 16 manages the physical location of pages of data addressed virtually by microprocessor 14. If the virtual address used by microprocessor 14 does not correspond to the physical address of the page, memory management unit 16 must set up a memory management unit entry which correlates the physical and virtual addresses. For example, memory management unit 16 may calculate the offset required to determine an appropriate physical page address for the virtual page address provided by microprocessor 14. If the addressed virtual page is in memory, as when data have been previously written to the target page and microprocessor 14 attempts to write additional data to the target page, then memory management unit 16 determines at block 204 whether the addressed virtual page contains uncompressed data. If so, block 206 directs memory management unit 16 to set up the memory management unit entry. Memory management unit 16 then calculates an appropriate physical address and provides the physical address to microprocessor 14.

If the target page is in memory but is not uncompressed, i.e., the data in the page are in compressed format, memory management unit 16 determines at block 208 whether there is an unused page of memory available. If so, block 210 directs memory management unit 16 to allocate a page of memory to accept the data contained in the target page. Allocation may include, for example, moving address pointer 32 (Fig. 4) to the start of a page and setting logical flags to permit reading, writing or both to that page. At block 212, memory management unit 16 calls compression program 24 to decompress the compressed data and store the data in the allocated page. Memory management unit 16 then sets up the memory management unit entry at block 206.

If no unused page of memory is available, memory management unit 16 determines at block 214 whether there is a page of uncompressed memory in use. If not, RAM 18 is full of compressed data, block 216 directs memory management unit 16 to return a fail condition, and no further data may be stored. If RAM 18 contains a page of in-use uncompressed data, block 218 directs memory management unit 16 to call compression program 24 to compress that page of uncompressed data. After compression, memory management unit 16 then determines, at block 208, whether there is now an unused page of memory available. Since compression program 24 compressed data to free up a page, an unused page is now available and memory management unit 16 allocates that page for storage at block 210. Block 212 then directs memory management unit 16 to call compression program 24 to decompress the compressed data in the target page, then block 206 directs memory management unit 16 to set up the memory management unit entry.

Alternatively, at block 202, if the target page is not already in memory, as when microprocessor 14 is rendering data for that page for the first time, memory management unit 16 must determine at block 208 whether there is an unused page of memory available to serve as the target page. If so, block 210 directs memory management unit 16 to allocate that page, then block 206 directs memory management unit 16 to set up the memory management unit entry. If no memory is available for the target page, memory management unit 16 determines at block 214 whether there is a page of uncompressed memory in use. If not, a fail condition results at block 216 since RAM 18 is full of compressed data. If there is a page of uncompressed data available, at block 218 memory management unit 16 calls compression program 24 and directs compression program 24 to compress that page of uncompressed data. After compression, memory management unit 16 then determines at block 208 whether there is now an unused page of memory available. Since at this time compression program 24 already has compressed data to free up a page, an unused page is now available and memory management unit 16 allocates that page for storage at block 210. Memory management unit 16 then sets up the memory management unit entry for calculation of the physical address at block 206.

The ability of memory management unit 16 and compression program 24 to move, compress and decompress data allows a laser printer or other computer peripheral device employing the present invention to be made with less RAM. However, the laser printer or other device is effectively somewhat slower than prior art designs because of the above-described need to compress, move and decompress data. Thus, the present invention trades a somewhat slower operating speed for reduced memory requirements.

In addition to reduced memory requirements, the present invention provides a capability to effectively offer a 0.5 MB increase in memory capacity at substantially the same cost as prior art devices. That is, with 1.0 MB RAM, the present invention provides substantially identical functionality to a prior art design computer peripheral device using 1.5 MB.

It is to be understood that, while the detailed drawings and specific examples given describe preferred embodiments of the invention, they are for the purpose of illustration, that the apparatus of the invention is not limited to the precise details and conditions disclosed and that various changes may be made therein without departing from the invention which is defined by the following claims.

## Claims

1. A system for managing data in a peripheral device (12), said device being responsive to a host computer (10), the system comprising:
a processing means (14) for receiving said data from said host computer and for processing said data;
a memory means (17) coupled with said processing means for receiving said data from such processing means and for storing said data, said memory means comprising a plurality (19) of storage locations, said memory means receiving a physical address corresponding to one storage location of said plurality of storage locations, said memory means storing said data at a storage location corresponding to said physical address:
a memory management unit (16) for controlling communication of said data between said processing means and said memory means, said memory management unit being coupled with said processing means and with said memory means, said memory management unit receiving a virtual address from said processing means, determining said physical address from said virtual address, and providing said physical address to said memory means; and
a compression means (24) for reading said data stored in a first predetermined number of said plurality of storage locations, compressing said data to produce compressed data, and storing said compressed data in a second predetermined number of said plurality of storage locations, said second predetermined number being less than said first predetermined number;
said memory management unit determining an amount of said data stored within said memory means and generating a compression signal only when said amount exceeds a predetermined threshold;
said compression means responding to said compression signal to compress said data.

2. A system for managing data as claimed in claim 1 wherein said plurality of storage locations is arranged in an ordered array of subsets of storage locations.

3. A system for managing data as claimed in claim 2 wherein said memory management unit determines said amount of said data stored within a particular subset of said ordered array of subsets of storage locations and generates said compression signal when said amount exceeds a predetermined threshold within said particular subset.

4. A system for managing data as claimed in claim 2 wherein said memory management unit controls communication of said data between a first subset of said ordered array of subsets of storage locations and a second subset of said ordered array of subsets of storage locations.

5. A system for managing data as claimed in claim 4 wherein said memory management unit controls communication of said data from said first subset to said second subset after said compression means has effected said compressed storage of said data within said second subset.

6. A method for managing data in a peripheral device (12) responsive to a host computer (10), the method comprising:
transmitting said data from said host computer;
determining a virtual storage address for storing said data and determining from said virtual storage address a plurality of physical storage addresses for storing said data in a storage device (17);
routing said data to said storage device, said storage device being integral to said peripheral device, said storage device including a plurality of storage locations, each storage location of said plurality of storage locations corresponding to a physical storage address of said plurality of physical storage addresses;
storing said data in said storage device at said plurality of storage locations; compressing said data stored in a first predetermined number of storage locations of said plurality of storage locations within said storage device to produce compressed data when the quantity of data stored in said storage device exceeds a predetermined threshold, and storing said compressed data in a second predetermined number of storage locations of said plurality of storage locations, said second predetermined number of storage locations being less than said first predetermined number of storage locations.

7. A method for managing data in a peripheral device as claimed in claim 6 wherein said plurality of storage locations is arranged in an ordered array of subsets of storage locations.

8. A method for managing data in a peripheral device as claimed in claim 7 wherein the method further includes the step of communicating said data between a first subset of said ordered array of subsets of storage locations and a second subset of said ordered array of subsets of storage locations.

## Patentansprüche

1. System zum Verwalten von Daten in einer Peripherieeinrichtung (12), die auf einen Host-Computer (10) reagiert, mit:
einer Verarbeitungseinrichtung (14) zum Verarbeiten der aus dem Host-Computer empfangenen Daten;
einer Speichereinrichtung (17), die mit der Verarbeitungseinrichtung verbunden ist, um die Daten aus der Verarbeitungseinrichtung zu empfangen und die Daten zu speichern, wobei die Speichereinrichtung mehrere Speicher-Stellen (19) aufweist, die Speichereinrichtung eine physische Adresse empfängt, die einer Speicher-Stelle der mehreren Speicher-Stellen entspricht, und die Speichereinrichtung die Daten an einer der physischen Adresse entsprechenden Speicher-Stelle speichert;
einer zum Steuern der Übertragung der Daten zwischen der Verarbeitungseinrichtung und der Speichereinrichtung vorgesehenen Speicherverwaltungseinheit (16), die mit der Verarbeitungseinrichtung und mit der Speichereinrichtung verbunden ist, wobei die Speicherverwaltungseinheit eine virtuelle Adresse aus der Verarbeitungseinrichtung empfängt, die physische Adresse auf Basis der virtuellen Adresse bestimmt und die physische Adresse an die Speichereinrichtung ausgibt; und
einer Kompressionseinrichtung (24), die die Daten liest, die in einer ersten vorbestimmten Anzahl der mehreren Speicher-Stellen gespeichert sind, die Daten komprimiert, um komprimierte Daten zu erzeugen, und die komprimierten Daten in einer zweiten vorbestimmten Anzahl der mehreren Speicher-Stellen speichert, wobei die zweite vorbestimmte Anzahl kleiner als die erste vorbestimmte Anzahl ist;
wobei die Speicherverwaltungseinheit nur dann eine Menge der in der Speichereinrichtung gespeicherten Daten bestimmt und ein Kompressionssignal erzeugt, wenn die Menge einen vorbestimmten Schwellenwert überschreitet;
wobei die Kompressionseinrichtung auf das Kompressionssignal reagiert, indem sie die Daten komprimiert.

2. System zum Verwalten von Daten nach Anspruch 1, bei dem die mehreren Speicher-Stellen in einem geordneten Array von Unter-Sets von Speicher-Stellen angeordnet sind.

3. System zum Verwalten von Daten nach Anspruch 2, bei dem die Speicherverwaltungseinheit die Menge an Daten, die in einem bestimmten Unter-Set des geordneten Arrays von Unter-Sets von Speicher-Stellen gespeichert sind, bestimmt und ein Kompressionssignal erzeugt, wenn die Menge einen vorbestimmten Schwellenwert innerhalb des bestimmten Unter-Sets überschreitet.

4. System zum Verwalten von Daten nach Anspruch 2, bei dem die Speicherverwaltungseinheit die Übertragung von Daten zwischen einem ersten Unter-Set des geordneten Arrays von Unter-Sets von Speicher-Stellen und einem zweiten Unter-Set des geordneten Arrays von Unter-Sets von Speicher-Stellen steuert.

5. System zum Verwalten von Daten nach Anspruch 4, bei dem die Speicherverwaltungseinheit die Übertragung von Daten aus dem ersten Unter-Set zu dem zweiten Unter-Set steuert, nachdem die Kompressionseinrichtung die komprimierte Speicherung der Daten innerhalb des zweiten Unter-Sets durchgeführt hat.

6. Verfahren zum Verwalten von Daten in einer Peripherieeinrichtung (12), die auf einen Host-Computer (10) reagiert, mit den folgenden Schritten:
Übertragen der Daten aus dem Host-Computer;
Bestimmen einer virtuellen Speicheradresse zum Speichern der Daten und, auf der Basis der virtuellen Speicheradresse, Bestimmen mehrerer physischer Speicheradressen zum Speichern der Daten in einer Speichereinrichtung (17);
Leiten der Daten an die Speichereinrichtung, wobei die Speichereinrichtung in die Peripherieeinrichtung integriert ist und mehrere Speicher-Stellen aufweist, wobei jede Speicher-Stelle der mehreren Speicher-Stellen einer physischen Speicheradresse der mehreren physischen Speicheradressen entspricht;
Speichern der Daten an den mehreren Speicher-Stellen in der Speichereinrichtung; Komprimieren der in einer ersten vorbestimmten Anzahl von Speicher-Stellen der mehreren Speicher-Stellen in der Speichereinrichtung gespeicherten Daten zum Erzeugen komprimierter Daten, wenn die Menge in der Speichereinrichtung gespeicherter Daten einen vorbestimmten Schwellenwert überschreitet, und Speichern der komprimierten Daten in einer zweiten vorbestimmten Anzahl von Speicher-Stellen der mehreren Speicher-Stellen, wobei die zweite vorbestimmte Anzahl von Speicher-Stellen kleiner ist als die erste vorbestimmte Anzahl von Speicher-Stellen.

7. Verfahren zum Verwalten von Daten in einer Peripherieeinrichtung nach Anspruch 6, bei dem die mehreren Speicher-Stellen in einem geordneten Array von Unter-Sets von Speicher-Stellen angeordnet sind.

8. Verfahren zum Verwalten von Daten in einer Peripherieeinrichtung nach Anspruch 7, ferner mit dem Schritt des Übertragens der Daten zwischen einem ersten Unter-Set des geordneten Arrays von Unter-Sets von Speicher-Stellen und einem zweiten Unter-Set des geordneten Arrays von Unter-Sets von Speicher-Stellen.

## Revendications

1. Système pour la gestion de données dans un dispositif périphérique (12), ledit dispositif agissant en réponse à un ordinateur central (10), ledit système comprenant :
des moyens de traitement (14) pour recevoir lesdites données dudit ordinateur central et pour traiter ces données;
des moyens de mémoire (17) couplés auxdits moyens de traitement pour recevoir lesdites données provenant desdits moyens de traitement et pour les stocker, lesdits moyens de mémoire comprenant une pluralité (19) d'emplacements de stockage, lesdits moyens de mémoire recevant une adresse physique correspondant à un emplacement de stockage de ladite pluralité d'emplacements de stockage, lesdits moyens de mémoire stockant lesdites données en un emplacement de stockage correspondant à ladite adresse physique;
une unité de gestion de mémoire (16) pour commander la communication desdites données entre lesdits moyens de traitement et lesdits moyens de mémoire, ladite unité de gestion de mémoire étant couplée auxdits moyens de traitement et auxdits moyens de mémoire, ladite unité de gestion de mémoire recevant une adresse virtuelle provenant desdits moyens de traitement, déterminant ladite adresse physique de ladite adresse virtuelle et délivrant ladite adresse physique aux dits moyens de mémoire et,
des moyens de compression (24) pour lire lesdites données stockées dans un premier nombre prédéterminé de ladite pluralité d'emplacements de stockage, pour comprimer lesdites données afin de produire des données comprimées et stocker lesdites données comprimées dans un second nombre prédéterminé de ladite pluralité d'emplacements de stockage, ledit second nombre prédéterminé étant inférieur au dit premier nombre prédéterminé;
ladite unité de gestion de mémoire déterminant une quantité desdites données stockées dans lesdits moyens de mémoire et générant un signal de compression seulement lorsque ladite quantité dépasse un seuil prédéterminé;
lesdits moyens de compression agissant en réponse au signal de compression pour comprimer lesdites données.

2. Système de gestion de données selon la revendication 1 dans lequel ladite pluralité d'emplacements de stockage est conçue selon un réseau ordonné de sous-ensembles d'emplacements de stockage.

3. Système de gestion de données selon la revendication 2 dans lequel ladite unité de gestion de mémoire détermine ladite quantité desdites données stockées dans un sous-ensemble particulier dudit réseau ordonné de sous-ensembles d'emplacements de stockage et génère ledit signal de compression lorsque ladite quantité excède un seuil prédéterminé dans ledit sous-ensemble particulier.

4. Système de gestion de données selon la revendication 2 dans lequel ladite unité de gestion de mémoire commande la communication desdites données entre un premier sous-ensemble dudit réseau ordonné de sous-ensembles de stockage et un second sous-ensemble dudit réseau ordonné de sous-ensembles d'emplacements de stockage.

5. Système de gestion de données selon la revendication 4 dans lequel ladite unité de gestion de mémoire commande la communication desdites données dudit premier sous-ensemble audit second sous-ensemble après que lesdits moyens de compression ont effectué ledit stockage comprimé des données dans ledit second sous-ensemble.

6. Méthode de gestion de données dans un dispositif périphérique (12) agissant en réponse à un ordinateur central (10), ladite méthode comprenant :
l'émission desdites données à partir dudit ordinateur central;
- la détermination d'une adresse virtuelle de stockage pour stocker lesdites données et la détermination à partir de ladite adresse virtuelle de stockage, d'une pluralité d'adresses de stockage virtuelles pour stocker lesdites données dans un dispositif de stockage (17);
- l'acheminement desdites données vers ledit dispositif de stockage, ledit dispositif de stockage faisant partie intégrante dudit dispositif périphérique, le dispositif de stockage comprenant une pluralité d'emplacements de stockage, chaque emplacement de stockage de ladite pluralité d'emplacements de stockage correspondant à une adresse physique de stockage de ladite pluralité d'adresses physiques de stockage;
- le stockage desdites données dans ledit dispositif de stockage à ladite pluralité d'emplacements de stockage;
- la compression desdites données stockées dans un nombre prédéterminé d'emplacements de stockage, dans le dispositif de stockage, afin de produire des données comprimées lorsque la quantité de données stockées dans ledit dispositif de stockage dépasse un seuil prédéterminé et le stockage desdites données comprimées dans un second nombre prédéterminé d'emplacements de stockage de ladite pluralité d'emplacements de stockage, ledit second nombre prédéterminé d'emplacements de stockage étant inférieur audit premier nombre d'emplacements de stockage.

7. Méthode de gestion de données dans un dispositif périphérique selon la revendication 6, dans laquelle ladite pluralité d'emplacements de stockage est disposée selon un réseau ordonné de sous-ensembles d'emplacements de stockage.

8. Méthode de gestion de données dans un dispositif périphérique selon la revendication 7, dans laquelle la méthode comporte en outre l'étape de communication desdites données entre un premier sous-ensemble dudit réseau ordonné de sous-ensembles d'emplacements de stockage et un second sous-ensemble dudit réseau ordonné de sous-ensembles d'emplacements de stockage.
